# FASCICULE DE BREVET EUROPEEN

(11) **EP 1 438 212 B1**
(45) Date de publication et mention de la délivrance du brevet: **04.04.2007**
(21) Numéro de dépôt: 02791882.0
(22) Date de dépôt: 27.09.2002
(51) Int. Cl.: B60Q 3/06

(54) **DISPOSITIF D'ECLAIRAGE POUR COFFRE ARRIERE DE VEHICULE AUTOMOBILE DECOUVRABLE**
BELEUCHTUNGSVORRICHTUNG FÜR DEN KOFFERRAUM EINES KABRIOLETTS
LIGHTING DEVICE FOR THE BOOT OF A CONVERTIBLE MOTOR VEHICLE

(30) Priorité: 15.10.2001 FR 0113242
(43) Date de publication de la demande: 21.07.2004
(73) Titulaire: Peugeot Citroen Automobiles SA, 92200 Neuilly sur Seine (FR)
(72) Inventeur: GEORGE, Aubert, Thibaud, Michel, Marie, F-78750 Mareil-Marly (FR)
(74) Mandataire: Thinat, Michel
(86) Numéro de dépôt international: PCT/FR2002/003293
(87) Numéro de publication internationale: WO 2003/033301

(56) Documents cités:
- EP-A- 0 960 774
- FR-A- 2 696 375
- PATENT ABSTRACTS OF JAPAN vol. 1995, no. 09, 31 octobre 1995 (1995-10-31) & JP 07 164963 A (MAZDA MOTOR CORP), 27 juin 1995 (1995-06-27)

## Description

La présente invention concerne un dispositif d'éclairage pour coffre arrière de véhicule automobile découvrable.

Elle se rapporte plus particulièrement à un dispositif d'éclairage pour coffre arrière de véhicule automobile pourvu d'un toit rétractable dans ledit coffre, comprenant un élément de toit avant rigide et un élément de toit arrière formant lunette arrière, reliés à la carrosserie du véhicule par des moyens permettant de déplacer les deux éléments ci-dessus entre une position dans laquelle ces deux éléments recouvrent le véhicule et une position dans laquelle ceux-ci sont rangés dans le coffre arrière.

On comprend que sur ce type de véhicule, lorsque le toit est rangé dans le coffre, le moyen d'éclairage traditionnel du coffre, disposé dans une partie supérieure du coffre, se retrouve partiellement masqué le rendant de ce fait inefficace.

Afin de résoudre ce problème, il est envisageable de positionner le moyen d'éclairage du coffre dans la partie basse. Cependant, un tel agencement ne donne pas satisfaction pour une utilisation du coffre en position de recouvrement du véhicule, le moyen d'éclairage se retrouvant très rapidement masqué par les objets à transporter.

Le document JP-07164963 divulgue un dispositif selon les caractéristiques du préambule de la revendication 1.

Le but de l'invention est de proposer un dispositif d'éclairage qui permet de résoudre tout ou partie des inconvénients précités.

A cet effet, la présente invention a pour objet un dispositif d'éclairage d'un coffre de véhicule automobile utilisant un dispositif de toit rétractable dans le coffre arrière du véhicule, comprenant un élément de toit avant rigide et un élément de toit arrière formant lunette arrière, reliés à la carrosserie du véhicule par des moyens permettant de déplacer les deux éléments ci-dessus entre une position dans laquelle ces deux éléments recouvrent le véhicule et une position dans laquelle ceux-ci sont rangés dans le coffre arrière, l'un au moins des éléments de toit étant pourvu d'au moins un premier moyen d'éclairage de l'habitacle lorsque le toit est en position de recouvrement du véhicule, ledit dispositif étant caractérisé en ce qu'il comprend en outre des moyens de détection respectivement de la présence du toit en position repliée et de l'ouverture du volet du coffre arrière du véhicule qui sont reliés au moyen de commande de l'éclairage afin d'assurer l'allumage des moyens d'éclairage du toit lorsque cumulativement le toit est en position repliée et le volet de coffre est en position d'ouverture.

Selon une disposition avantageuse, les moyens de détection de l'ouverture du volet du coffre sont en outre associés à des seconds moyens d'éclairage disposés dans la partie supérieure du coffre afin de commander en fonction de l'état des moyens de détection l'allumage ou l'extinction des seconds moyens d'éclairage.

Toujours selon l'invention, les premiers moyens d'éclairage sont agencés sur l'élément de toit avant de façon à se retrouver en vis-à-vis de la partie transparente de la lunette arrière lorsque le toit est en position rangée dans le coffre.

Un autre objet de la présente invention concerne un véhicule automobile découvrable équipé d'un toit rétractable dans le coffre arrière, caractérisé en ce qu'il comprend un dispositif d'éclairage du coffre conforme à l'une quelconque des dispositions susmentionnées.

Selon une variante de réalisation, le véhicule peut comporter de manière classique, à l'intérieur du coffre, un rideau de séparation délimitant un compartiment supérieur destiné au rangement du toit et un compartiment inférieur destiné aux bagages. Dans une telle variante, le rideau de séparation est réalisé selon l'invention dans un textile à grosses mailles ou dans un matériau translucide afin de permettre le passage de la lumière émise par les premiers moyens d'éclairage.

Les caractéristiques de l'invention mentionnées ci-dessus, ainsi que d'autres, apparaîtront plus clairement à la lecture de la description suivante d'un exemple de réalisation, en se référant aux dessins annexés sur lesquels :
- la figure 1 est une vue schématique du toit rétractable selon l'invention et du coffre arrière d'un véhicule ; et
- la figure 2 est une vue schématique du circuit électrique du dispositif d'éclairage selon l'invention.

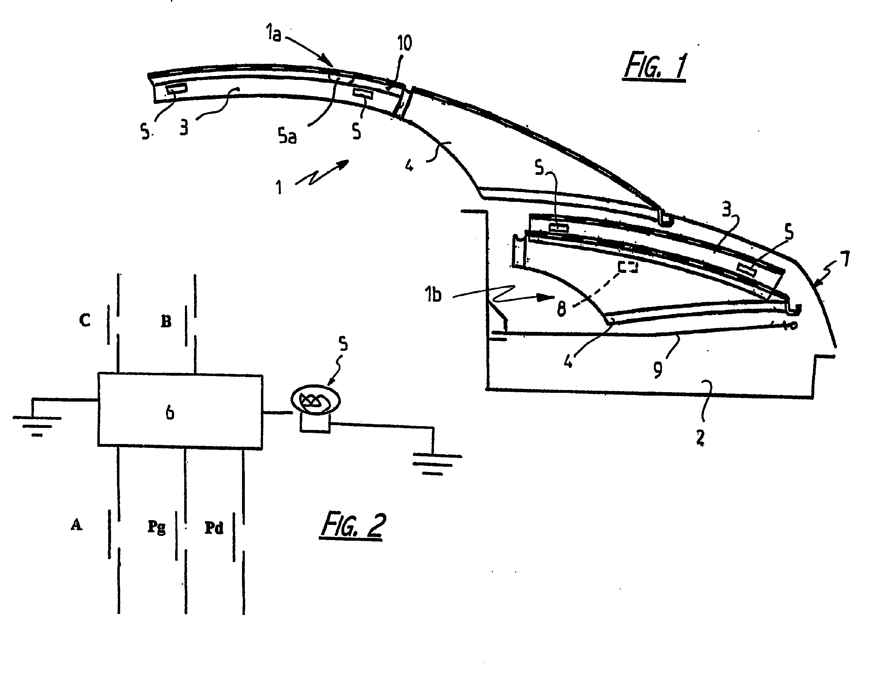

On a représenté à la figure 1 un toit 1 rétractable dans le coffre arrière 2 d'un véhicule découvrable, comprenant un élément de toit avant 3 rigide et un élément de toit arrière 4 formant lunette arrière, reliés à la carrosserie du véhicule par des moyens, non représentés, permettant de déplacer les deux éléments 3 et 4 ci-dessus entre une position 1a dans laquelle ces deux éléments 3 et 4 recouvrent le véhicule et une position 1 b dans laquelle ceux-ci sont rangés dans le coffre arrière 2. Les moyens permettant le déplacement des éléments de toit ne seront pas décrits dans la suite de la description, ces derniers sortant du cadre de l'invention.

De manière traditionnelle, l'un au moins des éléments de toit, de préférence l'élément de toit avant 3, est pourvu d'au moins un moyen d'éclairage 5 de l'habitacle lorsque le toit 1 est en position de recouvrement 1a du véhicule. Ce moyen d'éclairage 5 est relié de manière classique à un moyen de commande 6 de l'éclairage (figure 2) afin de piloter, en fonction des informations de l'état des moyens de détection d'une ouverture d'un ouvrant, tel qu'une des portes du véhicule désignées par les références Pd et Pg respectivement pour la porte droite et la porte gauche, ou encore la volonté A d'un passager du véhicule, l'allumage ou l'extinction dudit moyen d'éclairage 5. Ces moyens de détection Pg, Pd et A sont constitués par exemple d'interrupteurs, comme schématisé à la figure 2.

Selon la présente invention, le dispositif d'éclairage est pourvu en outre de moyens de détection, désignés par les références B et C, respectivement de la présence du toit 1 en position repliée 1 b et de l'ouverture du volet 7 du coffre arrière du véhicule qui sont reliés au moyen de commande 6 de l'éclairage afin d'assurer l'allumage des moyens d'éclairage 5 du toit 1 lorsque cumulativement le toit est en position repliée et le volet de coffre est en position d'ouverture.

Les moyens de détection C de l'ouverture du volet 7 du coffre sont en outre associés à des seconds moyens d'éclairage 8 disposés dans la partie supérieure du coffre afin de commander, en fonction de l'état des moyens de détection C de la position du volet, l'allumage ou l'extinction des seconds moyens d'éclairage 8.

Afin de mieux illustrer le fonctionnement du dispositif selon l'invention, on a représenté à la figure 2 un schéma électrique du dispositif d'éclairage selon l'invention.

On a représenté dans le tableau ci-dessous la logique de fonctionnement du dispositif selon l'invention en fonction de l'état des moyens de détection :
- C et B sont actionnés: allumage des premiers moyens d'éclairage, c'est-à-dire éclairage du coffre,
- A est actionné : allumage des premiers moyens d'éclairage, c'est-à-dire éclairage de l'habitacle,
- C est actionné : allumage des seconds moyens d'éclairage, c'est-à-dire éclairage du coffre,
- Pg ou Pd est actionné: allumage des premiers moyens d'éclairage, c'est-à-dire éclairage de l'habitacle.

On comprend naturellement que les premiers moyens d'éclairage 5 sont agencés de telle façon que ceux-ci se retrouvent en vis-à-vis de la partie transparente de la lunette arrière 4 une fois repliée dans le coffre 2. Le compartiment à bagages sous le toit 1 en position rangée 1b est ainsi éclairé à travers la lunette arrière 4.

On notera à ce propos que les éclaireurs 5 sont représentés sur les côtés du toit, mais ils peuvent également se trouver dans le plan médian du véhicule, intégrés à la garniture de pavillon 10, comme représenté en 5a, ou en un endroit quelconque dans la partie de toit avant, l'essentiel étant qu'au moins un certain nombre d'entre eux se trouvent en vis-à-vis de la lunette arrière lorsque le toit est en position repliée dans le coffre, afin d'assurer un éclairage efficace de celui-ci dans cette position.

Afin de séparer le compartiment à bagages du compartiment de rangement du toit dans le coffre, il est généralement agencé entre les deux compartiments un rideau de séparation 9.

Avantageusement selon la présente invention, ce rideau de séparation 9, représenté à la figure 1, est réalisé par exemple dans un textile à grosses mailles ou dans un matériau translucide afin de permettre le passage de la lumière émise par les premiers moyens d'éclairage 5.

On notera que l'alimentation électrique des premiers moyens d'éclairage 5 est assurée par un câblage qui emprunte un cheminement le long des bielles du mécanisme de toit commun au cheminement du câblage de l'alimentation électrique des serrures implantées à l'avant du toit, non représentées.

On comprend à la lecture de la description ci-dessus que le dispositif de la présente invention permet d'implanter dans le coffre un ou des éclaireurs en zone supérieure du coffre permettant un éclairage satisfaisant de l'ensemble du coffre en position de recouvrement du véhicule et que ce ou ces éclaireurs en position rangée du toit dans le coffre étant occultés notamment par les montants de custodes, l'éclairage de la zone de coffre encore disponible sous le toit est alors assuré par les premiers moyens d'éclairage 5 dont est équipé le véhicule.

Bien que l'invention ait été décrite en liaison avec un mode de réalisation particulier, elle comprend tous les équivalents techniques des moyens décrits.

## Revendications

1. Dispositif d'éclairage d'un coffre (2) de véhicule automobile utilisant un dispositif de toit rétractable (1) dans le coffre arrière (2) du véhicule, comprenant un élément de toit avant (3) rigide et un élément de toit arrière (4) formant lunette arrière, reliés à la carrosserie du véhicule par des moyens permettant de déplacer les deux éléments (3 et 4) ci-dessus entre une position (1a) dans laquelle ces deux éléments (3 et 4) recouvrent le véhicule et une position dans laquelle ceux-ci sont rangés dans le coffre arrière (4), l'un au moins des éléments de toit étant pourvu d'au moins un premier moyen d'éclairage (5, 5a) de l'habitacle lorsque le toit (1) est en position de recouvrement (1 a) du véhicule, ledit dispositif étant **caractérisé en ce qu'**il comprend en outre des moyens de détection (B et C) respectivement de la présence du toit en position repliée et de l'ouverture du volet (7) du coffre arrière du véhicule qui sont reliés au moyen de commande de l'éclairage (6) afin d'assurer l'allumage des premiers moyens d'éclairage (5, 5a) du toit (1) lorsque cumulativement le toit est en position repliée et le volet de coffre est en position d'ouverture.

2. Dispositif selon la revendication 1, **caractérisé en ce que** les moyens de détection (C) de l'ouverture du volet (7) du coffre sont en outre associés à des seconds moyens d'éclairage (8) disposés dans la partie supérieure du coffre (2) afin de commander en fonction de l'état des moyens de détection (C) l'allumage ou l'extinction des seconds moyens d'éclairage (8).

3. Dispositif selon la revendication 1 ou 2, **caractérisé en ce que** les premiers moyens d'éclairage (5, 5a) sont agencés sur l'élément de toit avant (3) de façon à se retrouver en vis-à-vis de la partie transparente de la lunette arrière (4) lorsque le toit (1) est en position rangée dans le coffre (2).

4. Véhicule automobile découvrable équipé d'un toit rétractable dans le coffre arrière, **caractérisé en ce qu'**il comprend un dispositif d'éclairage du coffre conforme à l'une quelconque des revendications précédentes.

5. Véhicule selon la revendication 4 comportant à l'intérieur du coffre un rideau de séparation (9) délimitant un compartiment supérieur destiné au rangement du toit et un compartiment inférieur destiné aux bagages, **caractérisé en ce que** ledit rideau de séparation (9) est réalisé dans un textile à grosses mailles ou dans un matériau translucide afin de permettre le passage de la lumière émise par les premiers moyens d'éclairage (5, 5a).

## Claims

1. Device for lighting the boot (2) of an automotive vehicle having a retractable roof device (1) in the rear boot (2) of the vehicle comprising a rigid front roof element (3) and a rear roof element (4) forming the rear window, joined to the bodywork of the vehicle by means causing the two above elements (3 and 4) to be moved between a position (1a) in which these two elements (3 and 4) cover the vehicle and a position in which they are stowed away in the rear boot (4), at least one of the roof elements being provided with at least first lighting means (5,5a) to light the passenger compartment when the roof (1) is in position (1a) in which it covers the vehicle, said device being **characterized in that** it also comprises detection means (B and C) respectively to detect the presence of the roof in stowed-away position and the opening of the rear boot lid (7) of the vehicle, these means being connected to the lighting command means (6) to ensure switching-on of the first lighting means (5,5a) of roof (1) when accumulatively the roof is in stowed-away position and the boot lid is in opened position.

2. Device according to claim 1, **characterized in that** the detection means (C) to detect opening of the boot lid (7) are also associated with second lighting means (8) arranged in the upper part of the boot (2) so that, in relation to the status of the detection means (C), they can command the switching-on or switching-off of the second lighting means (8).

3. Device according to claim 1 or 2, **characterized in that** the first lighting means (5, 5a) are arranged on the front roof element (3) so that they lie opposite the transparent part of the rear window (4) when the roof (1) is in stowed-away position in the boot (2).

4. Convertible automotive vehicle equipped with a retractable roof in the rear boot, **characterized in that** it comprises a boot lighting device conforming to any of the preceding claims.

5. Vehicle according to claim 4 comprising a separating screen (9), inside the boot, delimiting an upper compartment intended for stowing away the roof and a lower compartment intended for luggage, **characterized in that** said separating screen (9) is made in a wide-mesh fabric or a translucent material to allow passing of the light emitted by the first lighting means (5,5a).

## Patentansprüche

1. Beleuchtungsvorrichtung für den Kofferraum (2) eines Kraftfahrzeugs, das eine in den hinteren Kofferraum (2) des Fahrzeugs einziehbare Dachvorrichtung (1) verwendet, ein starres vorderes Dachelement (3) und ein hinteres, die Heckscheibe bildendes Dachelement (4) umfassend, die mit der Karosserie des Fahrzeugs durch Mittel verbunden sind, die es erlauben, die zwei obigen Elemente (3 und 4) zwischen einer Stellung (1a), in welcher diese zwei Elemente (3 und 4) das Fahrzeug bedecken, und einer Stellung, in welcher diese im hinteren Kofferraum (4) verstaut sind, zu bewegen, wobei mindestens eines der Dachelemente mit mindestens einem ersten Beleuchtungsmittel (5, 5a) des Fahrgastraums versehen ist, wenn das Dach (1) in fahrzeugüberdachender Stellung (1a) ist, wobei diese Vorrichtung **dadurch gekennzeichnet ist, dass** sie weiterhin Mittel zum Erkennen (B und C) jeweils der Präsenz des Dachs in zusammengefalteter Stellung und der Öffnung der Klappe (7) des hinteren Kofferraums des Fahrzeugs umfasst, die mit dem Mittel zur Steuerung der Beleuchtung (6) verbunden sind, um das Einschalten der ersten Beleuchtungsmittel (5, 5a) des Dachs (1) sicherzustellen, wenn sich das Dach in zusammengefalteter Stellung befindet und gleichzeitig der Kofferraum geöffnet ist.

2. Vorrichtung nach Anspruch 1, **dadurch gekennzeichnet, dass** die Mittel zum Erkennen (C) der Öffnung der Klappe (7) des Kofferraums weiterhin mit zweiten Beleuchtungsmitteln (8) verbunden sind, die im oberen Teil des Kofferraums (2) angeordnet sind, um in Abhängigkeit des Status der Mittel zum Erkennen (C) das Einschalten oder Ausschalten der zweiten Beleuchtungsmittel (8) zu steuern.

3. Vorrichtung nach Anspruch 1 oder 2, **dadurch gekennzeichnet, dass** die ersten Beleuchtungsmittel (5, 5a) derart am vorderen Dachelement (3) angebracht sind, dass sie sich gegenüber dem durchsichtigen Teil der Heckscheibe (4) befinden, wenn sich das Dach (1) in Verstaustellung im Kofferraum (2) befindet.

4. Abdeckbares Kraftfahrzeug, ausgestattet mit einem in den hinteren Kofferraum einziehbarem Dach, **dadurch gekennzeichnet, dass** es eine Vorrichtung zur Beleuchtung des Kofferraums aufweist, die einem der vorhergehenden Ansprüche entspricht.

5. Fahrzeug nach Anspruch 4, im Innern des Kofferraums einen Trennvorhang (9) umfassend, der zur Aufnahme des Dachs ein oberes Fach und des Gepäcks ein unteres Fach abteilt, **dadurch gekennzeichnet, dass** der besagte Trennvorhang (9) aus einer großmaschigen Textilie oder einem transparenten Material besteht, um den Durchlass des von den ersten Beleuchtungsmitteln (5, 5a) abgestrahlten Lichts zu ermöglichen.
